# EUROPÄISCHE PATENTSCHRIFT

(11) **EP 3 610 172 B1**
(45) Veröffentlichungstag und Bekanntmachung des Hinweises auf die Patenterteilung: **11.06.2025**
(21) Anmeldenummer: 18719087.1
(22) Anmeldetag: 11.04.2018
(51) Int. Cl.: F16F 7/116, E04B 1/98, F03D 13/20

(54) **SCHWINGUNGSDÄMPFUNG EINES WINDENERGIEANLAGENTURMS**
VIBRATION DAMPING OF A WIND TURBINE TOWER
AMORTISSEMENT DES VIBRATIONS D'UNE TOUR D'ÉOLIENNE

(30) Priorität: 12.04.2017 DE 102017107912
(43) Veröffentlichungstag der Anmeldung: 19.02.2020
(73) Patentinhaber: Wobben Properties GmbH, 26607 Aurich (DE)
(72) Erfinder: NITSCHE, Maik, 26419 Schortens (DE); BÜSCHEL, Alexander, 28279 Bremen (DE); SCHÜLLER, Jörg, 28213 Bremen (DE); RÖTHEL, Steffen, 18055 Rostock (DE)
(74) Vertreter: Eisenführ Speiser
(86) Internationale Anmeldenummer: PCT/EP2018/059293
(87) Internationale Veröffentlichungsnummer: WO 2018/189245

(56) Entgegenhaltungen:
- CN-A- 102 434 404
- DE-A1- 19 856 500
- JP-A- H07 158 693
- US-A1- 2015 322 923

## Beschreibung

Die vorliegende Erfindung betrifft ein Kopplungselement zum Befestigen zwischen einem Schwingkörper und einer Turmwandung eines Turms einer Windenergieanlage, um eine relative Bewegung zwischen dem Schwingkörper und der Turmwandung zu beeinflussen, um dadurch ein Schwingverhalten des Turms zu beeinflussen. Außerdem betrifft die vorliegende Erfindung einen Turm einer Windenergieanlage mit einer Schwingvorrichtung zum Beeinflussen einer Schwingung des Turmes. Außerdem betrifft die vorliegende Erfindung eine Schwingvorrichtung, die zur Verwendung in einem Turm einer Windenergieanlage vorbereitet ist, um eine Schwingung des Turmes zu beeinflussen. Außerdem betrifft die vorliegende Erfindung ein Verfahren zum Beeinflussen einer Turmschwingung. Außerdem betrifft die vorliegende Erfindung eine Windenergieanlage.

Windenergieanlagen sind allgemein bekannt und moderne Windenergieanlagen weisen einen Windenergieanlagenturm auf, auf dem eine Gondel angeordnet ist. Die Gondel weist einen Rotor mit Rotorblättern auf, um damit elektrische Energie aus Wind zu gewinnen. Besonders im Betrieb wirkt der Wind auf diese Rotorblätter aber teilweise auch auf die Gondel und den Turm und der Wind kann auch zu einem Schwingen der Windenergieanlage, besonders des Turmes der Windenergieanlage führen. Auch die Drehung des Rotors kann zu einer Schwingung des Turmes führen oder diese beeinflussen. Im ungünstigsten Fall können in Abhängigkeit von Turmeigenfrequenzen bei bestimmten Rotordrehzahlen Resonanzsituationen auftreten. Im theoretisch ungünstigsten Fall kann das zu einer Resonanzkatastrophe führen.

Solchen Schwingungsproblemen kann durch eine entsprechende Turmkonstruktion begegnet werden. Eine Möglichkeit ist, den Turm so massiv oder starr zu bauen, dass dieser praktisch gar nicht oder nicht nennenswert schwingt. Eine solche Konstruktion ist aber regelmäßig mit einem sehr hohen Aufwand, besonders Materialaufwand verbunden.

Andere, eher moderne Ansätze schlagen eine solche Turmkonstruktion vor, dass Resonanzfrequenzen nicht mit Betriebspunkten der Windenergieanlagen zusammenfallen, bei denen solche Drehzahlen auftreten, die diese Resonanzfrequenzen ansprechen können bzw. diesen entsprechen können. Solche Lösungen werden dann regelmäßig mit der Anlagensteuerung koordiniert, besonders so, dass die Anlagensteuerung etwaige Resonanzpunkte mit der Drehzahl bspw. beim Hochfahren der Windenergieanlage möglichst schnell durch steuert.

Aber auch das Konstruieren solcher Türme kann einen erhöhten Aufwand bedeuten. Außerdem schränkt eine solche Lösung den Betriebsbereich der Windenergieanlage ein.

Es sind auch grundsätzlich Lösungen vorgeschlagen worden, eine Windenergieanlage in ihrem Turm mit einem Tilgersystem zu versehen, das dazu ausgelegt ist, solche Turmschwingungen zu bedämpfen. Solche Tilgersysteme sind allerdings aufwendig und oftmals nicht ausgereift und können zudem im Turminneren sehr störend sein. Besonders mittig im Turm aufgehängte Pendeldämpfer können besonders mit mittigen Kabelführungen und anderen dort angeordneten Elementen kollidieren. Besonders für das Einbringen großer Schwingmassen, die durch in den Schwingkörpern eingefülltes Wasser realisiert werden können, kann regelmäßig ein notwendiger Bauraum fehlen. Auch kann die Pendelbewegung einen ungünstigen Bewegungsanteil aufweisen.

Ebenfalls sind schon Lösungen vorgeschlagen worden, bei denen in der Gondel über entsprechende Rohrsysteme Flüssigkeitsdämpfersysteme eine Schwingungsdämpfung erreichen sollen. Hierbei können Flüssigkeiten, besonders Wasser, so bewegt, besonders gepumpt werden, dass dies einer Schwingbewegung entgegenwirken kann. Auch ein solches System ist recht aufwendig und es kommt hier das Problem hinzu, dass die der Turmschwingung entgegenwirkende Kraft von der Gondel auf den Turm übertragen werden muss, also eine Belastung eines Azimutlagers nach sich ziehen kann.

Außerdem ist aus der deutschen Offenlegungsschrift DE 10 2012 222 191 A1 ein Schwingungstilgermodul bekannt, bei dem Pendelfederelemente verwendet werden, die in Richtung einer Hängeachse eines dort verwendeten Pendelsystems verlaufen.

Das Deutsche Patent- und Markenamt hat in der Prioritätsanmeldung zu vorliegender Anmeldung folgenden Stand der Technik recherchiert: DE 198 56 500 A1 und DE 10 2012 222 191 A1.

Der vorliegenden Erfindung liegt somit die Aufgabe zugrunde, zumindest eines der o.g. Probleme zu adressieren. Insbesondere soll eine Lösung vorgeschlagen werden, die auf einfache Art und Weise, besonders auf einfache konstruktive Art und Weise und insbesondere passiv Schwingproblemen eines Turms einer Windenergieanlage entgegenwirken soll. Zumindest soll gegenüber bisher bekannten Lösungen eine Alternative vorgeschlagen werden.

Erfindungsgemäß wird einen Turm gemäß Anspruch 1 vorgeschlagen.

Grundsätzlich sind dabei für einen Turm und einen Schwingkörper mehrere Kopplungselemente vorgesehen, bspw. sechs oder mehr Kopplungselemente, um nur ein Beispiel zu nennen.

Die Kopplung lässt also eine Relativbewegung zwischen Schwingkörper und Turmwandung zu und diese Relativbewegung weist eine erste und eine zweite Bewegungsrichtung auf. Bei der ersten Bewegungsrichtung bewegen sich der erste und zweite Befestigungsabschnitt aufeinander zu, wohingegen sie sich bei der zweiten Bewegungsrichtung voneinander entfernen. Grundsätzlich kann die erste und zweite Bewegungsrichtung auch umgekehrt definiert werden. Jedenfalls sind diese beiden Bewegungsrichtungen so zu verstehen, dass sie zueinander entgegengesetzt gerichtet sind. Es geht nicht darum, dass diese quer zueinander gerichtet sind.

Es ist außerdem ein Federmittel vorgesehen, dass eine federelastische Kopplung zwischen dem ersten und zweiten Befestigungsabschnitt erreicht und damit eine federelastische Kopplung zwischen der Turmwandung und dem Schwingkörper erreicht, wenn das Kopplungselement installiert ist. Die federelastische Kopplung kann durch eine Federfunktion beschrieben werden. Das Federmittel ist so ausgebildet, dass die erste Bewegung in dem Federmittel zu einer Stauchung eines ersten Federabschnitts und einer Streckung eines zweiten Federabschnitts führt. Außerdem ist das Federmittel so ausgebildet, dass die zweite Bewegung in dem Federmittel zu einer Streckung des ersten Federabschnitts und zu einer Stauchung des zweiten Federabschnitts führt. Es sind also zwei Federabschnitte vorgesehen, von denen immer eines gestaucht und das andere gestreckt wird. Bei umgekehrter Bewegungsrichtung kehrt sich auch diese Funktion um, so dass also dann der gestauchte Federabschnitt sich wieder streckt und der gestreckte gestaucht wird.

Diese Funktionalität über diese beiden Federabschnitte ist dabei so ausgebildet, dass die Federfunktion für die erste und zweite Bewegungsrichtung aneinander möglichst angeglichen werden.

Es wird damit besonders eine Federvariante verbessert, bei der eine Bewegungsrichtung eine Feder streckt und die dazu rückwärts gerichtete Bewegungsrichtung diese Feder staucht, wodurch regelmäßig sowohl richtungs- als auch auslenkungsamplitudenabhängige Federfunktionen resultieren können. Der Vorschlag dieser zwei Federabschnitte erreicht somit eine Gleichmäßigkeit dieser Federfunktion und damit eine Gleichmäßigkeit der mechanischen Kopplung dieses Kopplungselementes in seiner Anwendung zwischen der Turmwandung und dem Schwingkörper.

Die Federfunktion soll dadurch in beide Bewegungsrichtungen im Wesentlichen gleich sein. Es entspricht auch dem erfindungsgemäßen Gedanken, wenn anderweitig erreicht wird, dass die Federfunktion für die erste und zweite Bewegungsrichtung im Wesentlichen gleich ist.

Vorzugsweise ist das Kopplungselement als Federdämpferelement ausgebildet und weist neben dem Federmittel einen Dämpfungsabschnitt für eine dämpfende Kopplung zwischen dem ersten und zweiten Befestigungsabschnitt auf. Diese dämpfende Kopplung kann durch eine Dämpfungsfunktion beschrieben werden. Dazu wird vorgeschlagen, dass die Dämpfungsfunktion für die erste und zweite Bewegungsrichtung im Wesentlichen gleich. Damit kann auch für die Dämpfung eine Gleichmäßigkeit erreicht werden, so dass die erste und zweite Bewegung gleich, also symmetrisch beeinflusst werden.

Vorzugsweise ist die Federfunktion nicht nur in beide Bewegungsrichtungen im Wesentlichen gleich, sondern auch im Wesentlichen linear. Die Federkraft des gesamten Federmittels, also die Summe der Federkräfte des ersten und zweiten Federabschnitts, ist somit dem Betrage nach im Wesentlichen proportional zu einer Auslenkung aus einer Mittelposition bzw. einer Ruhelage.

Vorzugsweise ist auch die Dämpfungsfunktion nicht nur in die erste und zweite Bewegungsrichtung im Wesentlichen gleich, sondern auch im Wesentlichen linear. Die der Bewegung entgegen gerichtete Dämpfungskraft des Dämpfungsabschnitts ist also im Wesentlichen dem Betrage nach proportional zu einer Geschwindigkeit der Relativbewegung zwischen erstem und zweiten Befestigungsabschnitt, also zu einer Relativbewegung zwischen Schwingkörper und Turmwandung.

Dadurch, besonders wenn sowohl die Federfunktion also auch die Dämpfungsfunktion linear sind, kann eine Bedämpfung, besonders eine Bedämpfung mit konstanter Dämpfungskonstante, einer Schwingung der Turmdynamik bzw. der Bewegungsdynamik der Windenergieanlage insgesamt, erreicht werden.

Ein lineares Verhalten der Federfunktion kann besonders durch eine Vorspannung beider Federabschnitte erreicht werden. Natürlich kann eine lineare Federfunktion nur für eine vorbestimmte Auslegungswegstrecke erreicht werden, bei der das Kopplungselement und besonders das Federmittel keinen Anschlag erreicht. Es wird also vorgeschlagen, dass die Federfunktion für die vorbestimmte Auslegungswegstrecke im Wesentlichen linear ist.

Für die Dämpfungsfunktion kann eine Linearität und Symmetrie besonders durch eine symmetrische Ausgestaltung erreicht werden.

Gemäß einer Ausführungsform wird vorgeschlagen, dass das Kopplungselement einen ersten und zweiten Ankerabschnitt aufweist, die fest miteinander verbunden sind. Außerdem ist zwischen dem ersten und zweiten Ankerabschnitt ein Mittelabschnitt angeordnet, der zu diesen beiden Ankerabschnitten beweglich ist. Dabei ist der erste oder zweite Ankerabschnitt fest mit dem zweiten Befestigungsabschnitt verbunden und der Mittelabschnitt ist fest mit dem ersten Befestigungsabschnitt verbunden. Der Mittelabschnitt kann sich also zwischen den beiden Ankerabschnitten bewegen und kann sich damit zusammen mit dem Schwingkörper zwischen den beiden Ankerabschnitten und damit relativ zur Turmwandung bewegen. Die Relativbewegung zwischen Schwingkörper und Turmwandung entspricht somit der Bewegung des Mittelabschnitts zwischen den Ankerabschnitten.

Dadurch kann auf einfache Art und Weise besonders auch die gleichmäßige Aufteilung des Federmittels in zwei Federabschnitte realisiert werden.

Vorzugsweise weist hierbei das Federmittel eine erste Feder zwischen den Mittelabschnitt und dem ersten Ankerabschnitt auf und eine zweite Feder zwischen dem Mittelabschnitt und dem zweiten Ankerabschnitt. Hierbei bildet die erste Feder den ersten Federabschnitt und die zweite Feder den zweiten Federabschnitt. Vorzugsweise sind beide Federn identisch. Die Federn können bspw. als Schraubenfeder ausgebildet sein.

Vorzugsweise sind die erste und zweite Feder vorgespannt, um zu erreichen, dass keine der beiden Federn bei der Bewegung des Kopplungselementes einen entspannten Zustand erreicht oder überschreitet.. Besonders können die beiden Federn zwischen dem Mittelabschnitt und dem ersten Ankerabschnitt bzw. dem Mittelabschnitt und dem zweiten Ankerabschnitt eingespannt sein. Vorzugsweise ist diese Vorspannung so stark, dass auch beim Stauchen der ersten Feder bis zu einem Anschlag, an dem sie nicht mehr gestaucht werden kann, die zweite Feder noch unter Spannung steht, also noch vorgespannt ist. Gleiches gilt umgekehrt auch, dass nämlich die erste Feder noch unter Spannung steht und somit noch vorgespannt ist, wenn die zweite Feder vollständig gestaucht ist, also einen Anschlag erreicht hat. Dabei betrifft die Situation, dass eine der beiden Federn bis zu einem Anschlag gestaucht ist, nicht mehr den normalen Betriebsbereich. Mit anderen Worten ist das Kopplungselement für eine Verwendung vorgesehen, bei der die beschriebene maximale Stauchung nicht erreicht wird.

Vorzugsweise ist ein Abstand zwischen dem ersten und zweiten Ankerabschnitt einstellbar, um dadurch die Vorspannung einzustellen.

Vorzugsweise ist hierfür ein durch einen Aktuator betätigtes Einstellmittel vorgesehen, so dass auch eine Onlineverstellung möglich ist. Damit kann ggf. auf minimale Änderungen der Schwingeigenschaften des Turmes, die auch durch Änderungen der übrigen Elemente der Windenergieanlage bedingt sein können, reagiert werden.

Gemäß einer weiteren Ausführungsform wird vorgeschlagen, dass der Dämpfungsabschnitt zwischen dem Mittelabschnitt und dem ersten Ankerabschnitt, oder zwischen dem Mittelabschnitt und dem zweiten Ankerabschnitt befestigt ist. Dabei wurde besonders erkannt, dass auch eine in beide Bewegungsrichtungen symmetrische Dämpfungsfunktion und auch lineare Dämpfungsfunktion durch einen einzigen Dämpfungsabschnitt realisierbar ist, der hier zwischen den beiden sich relativ zueinander bewegenden Abschnitten angeordnet wird. Alternativ kann zwischen dem Mittelabschnitt und jedem der beiden Ankerabschnitte jeweils ein Dämpfungsabschnitt vorgesehen sein, die besonderes identisch sind, zumindest gleiche Eigenschaften aufweisen. Dadurch kann sichergestellt werden, dass sich die Dämpfung in beide Bewegungsrichtungen gleich verhält.

Erfindungsgemäß wird zudem ein Turm einer Windenergieanlage vorgeschlagen. Ein solcher Turm weist eine Turmmittelachse auf sowie eine Turmwandung, aus der der Turm im Wesentlichen aufgebaut ist. Außerdem ist eine Schwingvorrichtung zum Beeinflussen einer Schwingung des Turmes vorgesehen. Die Schwingvorrichtung weist einen im Turm zur Turmwandung beabstandet aufgehängten Schwingkörper auf. Demnach hängt dieser Schwingkörper im Turminneren und kann grundsätzlich auch dort relativ zur Turmwandung in verschiedene Richtungen schwingen. Grundsätzlich kann der Schwingkörper anderweitig als durch Aufhängung im Turm angeordnet sein, wie bspw. durch eine Lagerung, die im Wesentlichen eine Bewegung in beliebige Richtungen in einer Ebene senkrecht zur Turmmittelachse ermöglicht.

Der Schwingkörper ist dabei derart zur Turmwandung beabstandet aufzuhängen, bzw. anderweitig zu lagern, dass ausreichend Platz dafür bleibt, dass der Schwingkörper eine Bewegung relativ zum Turm ausführen kann.

Außerdem ist ein Kopplungselement zwischen dem Schwingkörper und der Turmwandung befestigt, um eine Relativbewegung zwischen dem Schwingkörper und der Turmwandung zu beeinflussen. Vorzugsweise sind mehrere Kopplungselemente, besonders vier, sechs oder acht Kopplungselemente vorgesehen. Insbesondere sind diese Kopplungselemente baugleich und gleichmäßig über den Umfang des Schwingkörpers verteilt. Besonders die Verwendung von sechs Kopplungselementen schafft eine gute gleichmäßige Verteilung über den Umfang des Schwingkörpers bei gleichzeitig nicht zu großem Materialaufwand, so dass sechs Kopplungselemente besonders zu bevorzugen sind.

Außerdem ist vorgesehen, dass der Schwingkörper entlang einer senkrechten Mittelachse hohl ausgebildet ist. Insbesondere ist er entlang der Turmmittelachse hohl ausgebildet. Durch diese hohle Ausbildung wird erreicht, dass der Schwingkörper Vorrichtungen im Turm wie bspw. einem Personen- oder Geräteaufzug nicht im Weg ist. Vorzugsweise ist somit der Schwingkörper derart hohl ausgebildet, dass ausreichend Platz dafür bleibt, dass ein Personenaufzug einer Windenergieanlage den Schwingkörper senkrecht und mittig durchqueren kann.

Es wurde auch erkannt, dass in einem außen liegenden Mantel sehr viel Masse untergebracht werden kann. Somit kann ein Schwingkörper mit großer Masse geschaffen werden, der gleichwohl ausreichend Platz für andere notwendige Vorrichtungen im Turm lässt.

Vorzugsweise ist der Schwingkörper im Wesentlichen als Hohlkegelstumpf oder als Hohlzylinder ausgebildet. Dadurch kann auf einfache und gleichmäßige Art und Weise eine große Masse des Schwingkörpers in diesem Hohlkegelstumpf bzw. Hohlzylinder untergebracht werden. Grundsätzlich wird ein Hohlzylinder vorgeschlagen, aber für eine Anpassung an eine konische Form des Turmes kann auch eine entsprechend konische Form des Mantels vorgeschlagen werden, so dass hierfür der genannte Hohlkegelstumpf vorgeschlagen wird.

Optional weist ein solcher Hohlkegelstumpf eine senkrechte Unterbrechung im Mantel auf, um für eine innen an der Turmwandung angeordnete Turmleiter Platz zu schaffen, so dass Servicepersonal entlang dieser Turmleiter in dem Turm auf- und ab-steigen kann und dabei den Schwingkörper im Bereich der Unterbrechung passieren kann.

Bspw. kann der Hohlzylinder oder Hohlkegelstumpf in einem Bereich von etwa 60 Grad, bezogen auf 360 Grad eines gesamten Umfangs, die Unterbrechung aufweisen. Es kommen auch etwas größere oder kleinere Bereiche in Betracht und vorzugsweise ist die Unterbrechung in einem Bereich von einer Größe von 30 bis 90 Grad vorgesehen.

Besonders mit einem Wert der Unterbrechung von 60 Grad können noch sechs Kopplungselemente gleichmäßig über den Umfang verteilt angeordnet werden. Ein Wert von 90 Grad ist besonders bevorzugt für eine Variante mit vier Kopplungselementen vorzuschlagen. Ein Wert von 30 Grad ist besonders bei großen Turmdurchmessern vorzuschlagen. Auch dann kann noch eine Person des Servicepersonals den Schwingkörper im Bereich seiner Unterbrechung beim Besteigen einer dort angeordneten Leiter passieren. Durch die Definition der Unterbrechung über einen Gradbereich bezogen auf den 360 Grad Umfang kann in jedem Fall eine ausreichende Unterbrechung vorgesehen sein, die auch bei nur geringem mittleren Hohlraum ausreichend Platz schaffen kann. Vorzugsweise wird eine gerade Anzahl Kopplungselemente vorgeschlagen, wobei die Kopplungselemente gleichmäßig um den Umfang des Schwingkörpers verteilt sind. Als kleinster Wert für die Unterbrechung werden 10° vorgeschlagen.

Gemäß einer Ausgestaltung wird vorgeschlagen, dass der Schwingkörper einen um die Mittelachse mit Unterbrechung umlaufenden Mantel aufweist. Dabei ist vorgesehen, dass die Wandstärke dieses umlaufenden Mantels in Umfangsrichtung variiert. Die Wandstärke variiert derart, dass der Schwingkörper trotz Unterbrechung einen Schwerpunkt in der Mittelachse hat. Die Mittelachse ist vertikal ausgerichtet und dabei in einem geometrischen Zentrum des Schwingkörpers. Insbesondere ist sie die Mittelachse bezogen auf die Außenkontur des Schwingkörpers. Außerdem oder alternativ entspricht sie im Ruhestand des Schwingkörpers und des Turmes der Turmmittelachse.

Zum Beeinflussen der Schwingung des Turmes, insbesondere zum gleichmäßigen Bedämpfen st der Masseschwerpunkt des Schwingkörpers im Ruhezustand in der Turmmittelachse. Durch die vorgesehene Unterbrechung im Mantel des Schwingkörpers würde sich, bei in Umfangsrichtung gleicher Wandstärke, der Massenschwerpunkt verschieben. Dies kann durch die vorgeschlagene Variation der Wandstärke des Schwingkörpers ausgeglichen werden. Durch eine entsprechend gleichmäßig verteilte Variation der Wandstärke des Schwingkörpers kann der Schwerpunkt trotz Unterbrechung in die Turmmittelachse bzw. die Mittelachse des Schwingkörpers gebracht werden. Dadurch kann auch bspw. das Vorsehen zusätzlicher Ausgleichsgewichte vermieden werden.

Vorzugsweise ist der Schwingkörper zur Turmwandung mittig mit einem mittleren Wandabstand aufgehängt, wobei der Wandabstand jeweils kleiner als 1/4 eines Turminnendurchmessers in dem betreffenden Bereich ist. Insbesondere ist er jeweils kleiner als 1/8 dieses Turminnendurchmessers ist. Dadurch wird erreicht, dass dieser Schwingkörper recht nahe an der Turmwandung ist und damit selbst einen vergleichsweise großen Durchmesser aufweist. Dadurch kann auch der Schwingkörper ein entsprechend großes Volumen aufweisen und damit eine entsprechend große signifikante Masse aufweisen, um den Turm auch signifikant in seinem Schwingverhalten beeinflussen zu können. Dieser Abstand, der kleiner als ein 1/4 oder vorzugweise sogar kleiner als 1/8 des Turminnendurchmessers an dieser Stelle ist, lässt noch ausreichend Platz für Relativbewegungen zwischen dem Schwingkörper und der Turmwandung. Vorzugsweise ist der Abstand größer als 1/20 des Turminnendurchmessers. Dadurch wird vermieden, dass dieser Platz zwischen dem Schwingkörper und der Turmwandung zu klein gewählt wird.

Vorzugsweise hat der Schwingkörper eine Höhe, die wenigstens der Hälfte seines Durchmessers, vorzugsweise wenigstens der Größe seines Durchmessers entspricht, vorzugsweise wenigstens doppelt so groß wie sein Durchmesser ist. Dadurch kann insgesamt eine sehr hohe Masse für den Schwingkörper bereitgestellt werden. All diese Lösungen ermöglichen gleichwohl noch eine gute Nutzung des Turminnenraumes bspw. für Kabelführungen oder ggf. einen Aufzug.

Erfindungsgemäß wird vorgeschlagen, dass der Schwingkörper über Pendelstangen an einem Befestigungsabschnitt, insbesondere an einem Turmkopfflansch, abgehängt ist. Erfindungsgemäß werden drei, vier oder mehr Pendelstangen vorgeschlagen.

Insbesondere wird eine gerade Anzahl von Pendelstangen vorgeschlagen. Durch Verwendung der Pendelstangen soll erreicht werden, dass der Schwingkörper im Wesentlichen auf translatorische bzw. kippfreie Bewegungen beschränkt ist. Vorzugsweise sind die Pendelstangen dabei beidseitig mit sphärischen Gelenkköpfen, also mit Kugelgelenken, oder einer kardanischen Aufhängung ausgebildet. Dadurch wird erreicht, dass die Pendelbewegung in alle horizontalen Richtungen ermöglicht wird. Die Gelenke der Pendelstangen sollen dabei nicht die Richtung der Pendelbewegung beeinflussen. Vorzugsweise sind die Pendelstangen wenigstens etwa so lang, wie der Schwingkörper hoch ist. Dadurch wird besonders erreicht, dass die Pendelbewegungen keinen oder keine nennenswerten vertikalen Anteil aufweisen. Vorzugsweise sind die Pendelstangen jeweils wenigstens dreimal so lang, insbesondere wenigstens fünfmal so lang und vorzugsweise wenigstens siebenmal so lang wie ein Abstand des Schwingkörpers zur Turmwandung im Ruhezustand.

Durch die Art der Aufhängung des Schwingkörpers, nämlich besonders an mehreren Pendelstangen, ergibt sich nach einer Auslenkung des Schwingkörpers durch die Gewichtskraft auch eine Rückstellkraft, die letztlich auch dabei zumindest hilft, den Schwingkörper in seiner Ruhelage zurückzubringen. Entsprechend kann der Einsatz von Rückstellfedern vermieden oder reduziert werden.

Vorzugsweise ist der Schwingkörper aus einem Material mit einer höheren Dichte als Wassers gefertigt. Zumindest weist er insgesamt eine höhere Dichte als Wasser auf. Es wird insbesondere vorgeschlagen, dass die Dichte wenigstens doppelt so hoch wie die von Wasser ist. Als bevorzugtes Material wird hierfür Beton vorgeschlagen. Insbesondere ist der Schwingkörper im Wesentlichen aus Beton gefertigt, vorzugsweise aus Stahlbeton. Es kann dazu aber auch ein Aufnahmekörper zum Einfüllen von Beton vorgesehen sein. Besonders in diesem Falle kommt in Betracht, dass nur Beton verwendet bzw. eingefüllt wird, ohne die Verwendung von Stahlbeton. Die Steifigkeit und Festigkeit sowie das Vorsehen von Aufhängungen bzw. Aufhängungspunkten kann durch diesen Aufnahmekörper erreicht werden.

Vorteilhaft bei der Verwendung eines Aufnahmekörpers zusammen mit Beton ist auch, dass flüssiger noch nicht abgebundener Beton pumpfähig ist und somit ist es möglich, den Schwingkörper als leeren Aufnahmekörper in dem errichteten Turm zu installieren und dann gewünschten Beton hoch zu pumpen.

Gemäß einer Ausführungsform ist aber vorgesehen, dass der Schwingkörper als vorgefertigtes Element, insbesondere als Betonfertigteil bereitgestellt wird.

Vorzugsweise ist der Turm dadurch gekennzeichnet, dass zwischen dem Schwingkörper und der Turmwandung mehrere Kopplungselemente angeordnet und in Umfangsrichtung um den Schwingkörper verteilt sind. Jedes dieser Kopplungselemente ist an dem Schwingkörper und der Turmwandung befestigt. Dadurch wird eine mechanische Kopplung zwischen dem Schwingkörper und der Turmwandung erreicht, wobei die Kopplung eine horizontale Relativbewegung zwischen Schwingkörper und Turmwandung zulässt, diese aber beeinflusst.

Der Schwingkörper, einschließlich seiner Aufhängung, bildet hiermit zusammen mit den Kopplungselementen die Schwingvorrichtung zum Beeinflussen der Schwingung des Turmes. Diese Schwingvorrichtung kann hierbei vorzugsweise als Tilgersystem ausgebildet sein, das auftretende Schwingungen reduzieren oder im Optimalfall sogar eleminieren kann. Diese Schwingvorrichtung, insbesondere das Tilgersystem, wird durch Wahl des Schwingkörpers und der Kopplungselemente auf die zu erwartenden Schwingungen des Turms, besonders auch der Frequenz, eingestellt oder nachgestellt. Zur Beeinflussung kann entsprechend die Masse des Schwingkörpers, die Federsteifigkeit der Kopplungselemente, die Dämpfungseigenschaft, besonders Dämpfungskonstante eines Dämpfungsabschnitts jedes Kopplungselements, und die Anzahl der Kopplungselemente, Position der Kopplungselemente, Länge der Pendelstangen eingestellt oder gewählt werden.

Vorzugsweise werden Kopplungselemente gemäß wenigstens einer vorstehend beschriebenen Ausführungsform der Kopplungselemente verwendet. Damit können die zu den Kopplungselementen beschriebenen Vorteile hier für die Schwingungsveränderung bzw. -dämpfung, -tilgung des Windenergieanlagenturms entsprechend eingesetzt werden.

Vorzugsweise sind die Kopplungselemente oberhalb und außerdem oder alternativ unterhalb des Schwingkörpers angeordnet. Dadurch sind besonders auch Kopplungselemente verwendbar, die eine deutlich größere Ausdehnung aufweisen, als ein Zwischenraum zwischen dem Schwingkörper und der Turmwandung vorhanden ist. Besonders bevorzugt ist hierbei ein bzw. der Mittelabschnitt jedes Kopplungselementes an einem oberen Rand oder unteren Rand des Schwingkörpers befestigt, wohingegen einer der beiden Ankerabschnitte an der Turmwandung befestigt ist und der verbleibende andere Ankerabschnitt frei in den Innenraum des Turmes ragt, insbesondere auch in einen Bereich oberhalb des inneren Hohlraums des Schwingkörpers. Die gesamte Konstruktion, also der im Turm installierte Schwingkörper mit den Kopplungselemente, lässt dabei gleichwohl noch ausreichend Platz im Turminneren frei, um den Turminnenbereich für verschiedene technische Einrichtungen zu verwenden, besonders darin aber elektrische Leitungen, besonders Kabelbündel, zu führen.

Vorzugsweise weist der Schwingkörper einen Masseschwerpunkt auf und der Schwingkörper ist in einer solchen Höhe in dem Turm aufgehängt, dass sich der Masseschwerpunkt in einer oberen Hälfte, insbesondere in einem oberen Dreifünftel des Turmes befindet. Außerdem oder alternativ ist vorgesehen, dass der Schwingkörper an einem Befestigungsabschnitt bzw. mehreren Befestigungsabschnitten aufgehängt ist, der bzw. die an dem Turmkopfflansch angeordnet ist bzw. sind. Es kommt auch eine Anordnung in der Nähe des Turmkopfflansches in Betracht, worunter aber zu verstehen ist, dass die Befestigung ggf. nicht unmittelbar an dem Turmkopfflansch erfolgt, aber in unmittelbarer Nähe des Turmkopfflansches. Bspw. kann auf dem letzten Turmsegment der Befestigungsabschnitt als umlaufender Befestigungsflansch vorgesehen sein, darauf ein Zwischenring und darauf der Turmkopfflansch. Vorzugsweise wird aber eine Befestigung der Befestigungsabschnitte an dem Turmkopfflansch vorgeschlagen.

Zunächst wird diese vertikale Position des Masseschwerpunktes des Schwingkörpers an einer Position vorgesehen, an der eine erste Eigenfrequenz eine große Auslenkung hat, deren Eigenform also dort eine große Auslenkung hat. Dabei können auch unterschiedliche Eigenformen bei der Biegeschwingung des Turmes auftreten.

Vorzugsweise ist die Schwingvorrichtung dazu ausgelegt, eine Schwingung des Turmes in Bezug auf seine Eigenfrequenzen zu bedämpfen. Eine entsprechende Auslegung kann, wie oben beschrieben wurde, über die Masse des Schwingkörpers, die Federfunktion der Kopplungselemente, die Dämpfungsfunktion der Kopplungselemente, die Anzahl der Kopplungselemente, Pendelstangenlänge und auch die vertikale Position des Masseschwerpunktes des Schwingkörpers eingestellt werden.

Außerdem wird eine Schwingvorrichtung vorgeschlagen, die zu Verwendung in einem Turm einer Windenergieanlage zum Beeinflussen einer Schwingung des Turms vorbereitet ist. Diese Schwingvorrichtung weist einen im Turm zur Turmwandung beabstandet aufhängbaren Schwingkörper auf und sie weist wenigstens ein Kopplungselement zum Befestigen zwischen dem Schwingkörper und der Turmwandung auf, um damit eine relative Bewegung zwischen dem Schwingkörper und der Turmwandung zu beeinflussen. Dazu wird vorgeschlagen, dass der Schwingkörper entlang einer senkrechten Mittelachse hohl ausgebildet ist und außerdem oder alternativ weist jedes Kopplungselement eine Federfunktion auf und die Federfunktion ist für eine erste und eine zweite Bewegungsrichtung, die zueinander entgegengesetzt gerichtet sind, im Wesentlichen gleich. Insbesondere können wenigstens vier, insbesondere genau vier oder genau sechs oder genau acht Kopplungselemente vorgesehen sein, die in einer Umfangsrichtung gleichmäßig um den Schwingkörper verteilt sind, vorzugsweise oberhalb des Schwingkörpers und/oder unterhalb des Schwingkörpers.

Vorzugsweise ist diese Schwingvorrichtung zur Verwendung in einem Turm gemäß einer vorstehend dazu beschriebenen Ausführungsform vorbereitet. Insbesondere weist die Schwingvorrichtung wenigstens ein Merkmal auf, wie im Zusammenhang mit der Beschreibung der Ausführungsformen des Turmes im Zusammenhang mit der Schwingvorrichtung beschrieben wurde.

Außerdem oder alternativ weist die Schwingvorrichtung wenigstens ein Kopplungselement auf, wie gemäß wenigstens einer vorstehend beschriebenen Ausführungsform zu einem Kopplungselement beschrieben wurde.

Außerdem wird ein Verfahren zum Beeinflussen einer Turmschwingung oder einer Turmeigenfrequenz eines Turmes einer Windenergieanlage vorgeschlagen, wobei dieser Turm eine Schwingvorrichtung mit mehreren Kopplungselementen aufweist. Dieses Verfahren schlägt vor, eine Turmeigenfrequenz zu erfassen, dann eine gewünschte Tilgerfrequenz vorzugeben und daraufhin die Kopplungselemente auf die Tilgerfrequenz einzustellen. Diese Schritte des Erfassens, Vorgebens und Einstellens werden vorzugsweise wiederholt, um das Verhalten zu verbessern.

Alternativ wird eine Turmschwingungsamplitude erfasst, eine gewünschte maximale Turmschwingungsamplitude vorgegeben und die Kopplungselemente so eingestellt, dass die Turmschwingungsamplitude unterhalb der gewünschten maximalen Turmschwingungsamplitude bleibt. Hier kommt besonders auch eine Veränderung der Dämpfungsfunktion in Betracht, um die Schwingungsamplitude zu verringern. Auch hier können die Schritte des Erfassens, Vorgebens und Einstellens wiederholt werden. Besonders wird vorgeschlagen, die Turmeigenfrequenz bzw. die Turmschwingungsamplitude kontinuierlich zu erfassen und davon abhängig zu entscheiden, ob die weiteren Schritte erforderlich sind oder nicht. Insbesondere kommt auch in Betracht, die Kopplungselemente nochmals einzustellen, was insoweit auch als Nachstellen bezeichnet werden kann, ohne eine gewünschte Tilgereigenfrequenz bzw. eine neue gewünschte maximale Turmschwingungsamplitude vorzugeben. Es kommt aber auch in Betracht, nicht nur das Einstellen der Kopplungselemente nachzuführen, sondern auch die gewünschte Tilgereigenfrequenz bzw. die gewünschte maximale Turmschwingungsamplitude nachzuführen, also hierzu die Sollwerte zu verändern.

Außerdem wird eine Windenergieanlage vorgeschlagen, die eine Schwingvorrichtung aufweist mit Kopplungselementen gemäß einer vorstehend beschriebenen Ausführungsform der Kopplungselemente, einen Turm aufweist gemäß einer vorstehend beschriebenen Ausführungsform eines Turmes, eine Schwingvorrichtung aufweist gemäß einer vorstehend beschriebenen Ausführungsform einer Schwingvorrichtung und außerdem oder alternativ eine Steuerungsvorrichtung aufweist, die dazu vorbereitet ist, ein vorstehend gemäß einer Ausführungsform beschriebenes Verfahren zum Beeinflussen einer Turmschwingung auszuführen.

Es wird auch vorgeschlagen, dass das Verfahren zum Beeinflussen einer Turmschwingung zusammen verwendet wird mit einer Schwingvorrichtung und Kopplungselementen gemäß einer vorstehend zu Kopplungselementen beschriebenen Ausführungsform, dass das zusammen mit einem Turm gemäß einer vorstehend beschriebenen Ausführungsform zu einem Turm verwendet wird und dass es außerdem oder alternativ zusammen verwendet wird mit einer Schwingvorrichtung gemäß einer vorstehend beschriebenen Ausführungsform zu einer Schwingvorrichtung. Damit können die Vorteile der jeweils beschriebenen Ausführungsformen für das vorgeschlagene Verfahren bzw. die vorgeschlagene Windenergieanlage ausgenutzt werden.

Im Ergebnis wird besonders eine Lösung vorgeschlagen, die auf einfache Art und Weise und dabei gleichzeitig effizient eine Schwingung eines Turmes einer Windenergieanlage bzw. eine Schwingung einer gesamten Windenergieanlage, die sich besonders im Turm bemerkbar macht, verändert. Die Veränderung kann das Frequenzverhalten oder die Amplitude betreffen. Dabei ist diese Lösung besonders als passive Lösung ausgebildet, die wenigstens eine Eigenschaft des Turmes bzw. der Windenergieanlage in Bezug auf ein Schwingverhalten beeinflussen kann. Dadurch kann besonders eine Veränderung des Systemverhaltens des Turmes bzw. der Windenergieanlage in Bezug auf das Schwingverhalten erreicht werden. Die Lösung ist dabei effizient und so ausgebildet, dass auch besonders der Turminnenraum nicht unnötig behindert wird. Es kann auch eine Einstellbarkeit vorgesehen sein, über die besonders auch vor Ort die Beeinflussung der Schwingungen eingestellt und angepasst werden kann.

Die Erfindung wird nun nachfolgend anhand von Ausführungsbeispielen unter Bezugnahme auf die begleitenden Figuren beispielhaft näher erläutert.
- Figur 1: zeigt eine Windenergieanlage in einer perspektivischen Darstellung.
- Figur 2: zeigt einen Ausschnitt eines Windenergieanlagenturms in einer Schnittansicht.
- Figur 3: zeigt einen Ausschnitt der Figur 2 mit weiteren Details.
- Figur 4: zeigt einen weiteren Ausschnitt der Figur 2 mit weiteren Details.
- Figur 5: zeigt einen horizontalen Schnitt durch den Turmausschnitt gemäß Figur 2.
- Figur 6: zeigt ein Kopplungselement in einer seitlichen Schnittansicht.

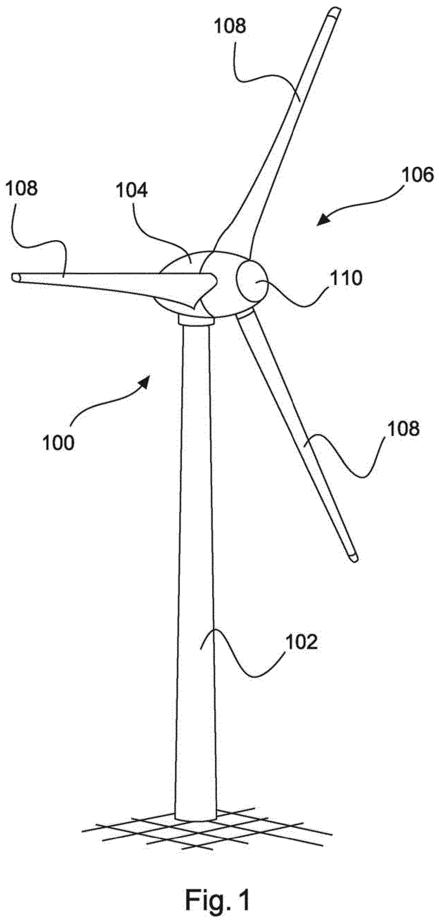

Figur 1 zeigt eine Windenergieanlage 100 mit einem Turm 102 und einer Gondel 104. An der Gondel 104 ist ein Rotor 106 mit drei Rotorblättern 108 und einem Spinner 110, der Teil einer Nabe ist, angeordnet. Der Rotor 106 wird im Betrieb durch den Wind in eine Drehbewegung versetzt und treibt dadurch einen Generator in der Gondel 104 an.

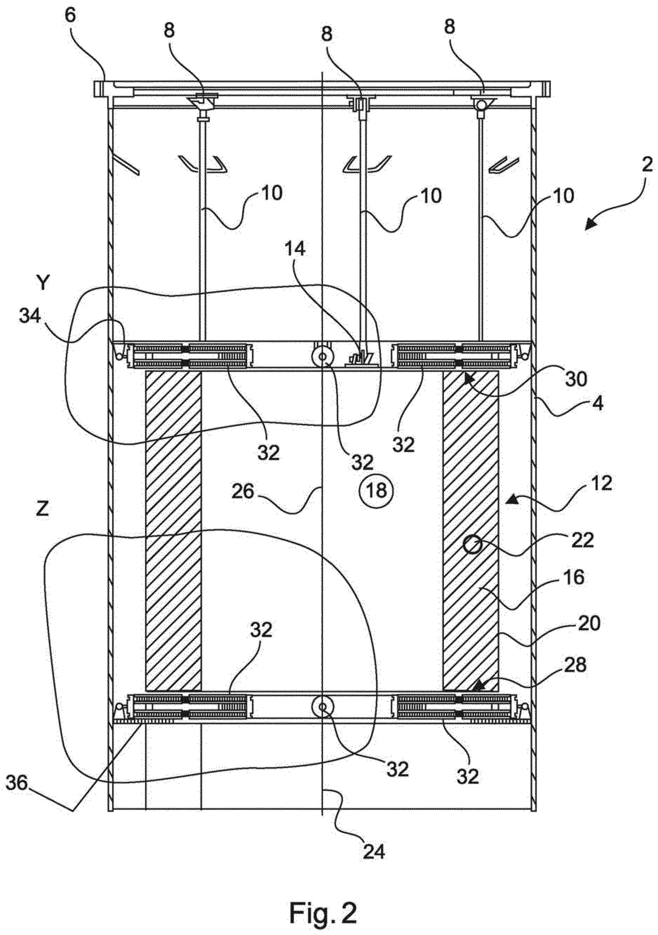

Figur 2 zeigt einen Turmabschnitt 2 mit einer Turmwandung 4, die über die Höhe auch in Art und Dicke variieren kann. Der Turmabschnitt 2 ist mit einem Turmkopfflansch 6 abgeschlossen. Der Turmkopfflansch 6 ist als umlaufender Flansch ausgebildet und besonders zum Aufnehmen eines Azimutlagers zum drehbaren Lagern einer Gondel vorgesehen.

An dem Turmkopfflansch 6 sind Aufhängungsbefestigungen 8 angebracht, die jeweils eine Pendelstange 10 schwenkbar tragen und wobei an den Pendelstangen 10 ein Schwingkörper 12 aufgehängt ist. Dazu sind die Pendelstangen 10 ebenfalls schwenkbar über Schwingkörperbefestigungen 14 an dem Schwingkörper 12 befestigt.

Die Pendelstangen 10 fungieren somit als Aufhängung für den Schwingkörper 12. Die Aufhängungsbefestigungen 8 können dabei auch als Turmkopfflanschbefestigungen bezeichnet werden.

Der Schwingkörper 12 kann somit durch die vergleichsweise langen Pendelstangen 10 im Wesentlichen in einer horizontalen Ebene in alle Richtungen schwingen. Neben Längsschwingungen in unterschiedliche Richtungen kommen auch kreisende Bewegungen, also eine Überlagerung mehrerer Längsschwingungen in Betracht.

Der Schwingkörper 12 wird im Wesentlichen durch einen Schwingkörpermantel 16 gebildet, der einen Schwingkörperhohlraum 18 umgibt. Der Schwingkörpermantel 16 kann, wie dies in Figur 2 und einigen anderen Figuren gezeigt ist, als Schwingkörperbehälter 20 mit Behälterfüllung 22 ausgebildet sein.

In Figur 2 ist auch eine Turmmittelachse 24 eingezeichnet, die somit eine Mittelachse für den Turm und damit den Turmabschnitt 2 bildet. Sie stimmt hier überein mit einer Körpermittelachse 26, die eine senkrechte Mittelachse für den Schwingkörper 12 bildet.

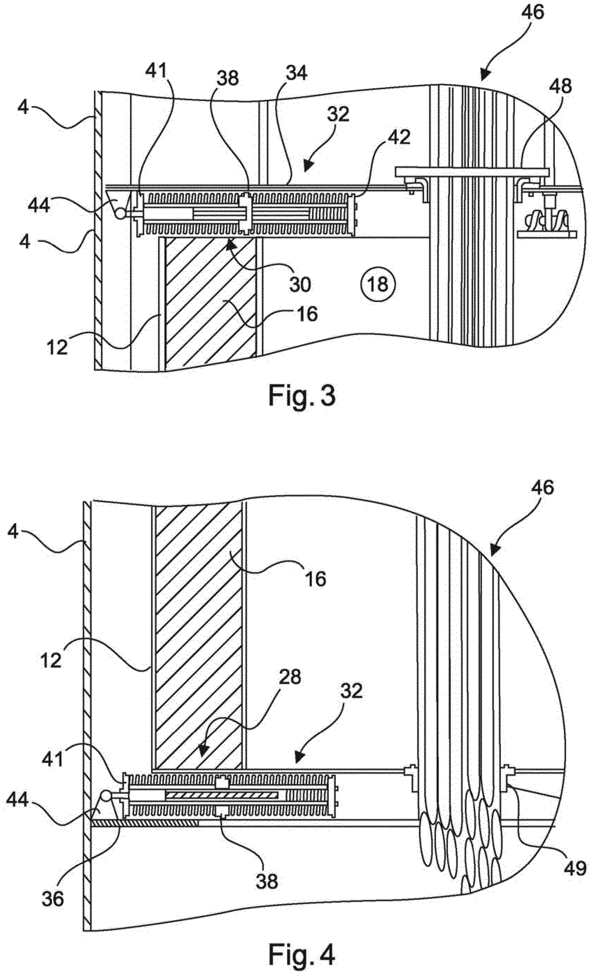

Der Schwingkörper 12 kann an einem unterem Rand 28 und einem oberen Rand 30 über Kopplungselemente 32 mit der Turmwandung 4 gekoppelt sein. Details der Kopplung im Bereich des oberen Randes 30 sind in der Figur 3 gezeigt und Details der Kopplung im Bereich des unteren Randes 28 sind in Figur 4 gezeigt.

Die Befestigung jedes Kopplungselementes 32 mit der Turmwandung 4 erfolgt bei den am oberen Rand 30 befestigten Kopplungselementen 32 über eine Befestigung an einem Turmschott 34. Ein solches Turmschott 34 wird grundsätzlich dafür verwendet, in dem Windenergieanlagenturm eine Plattform zu schaffen, auf der gearbeitet werden kann, oder auf der auch eine Ruhepause eingelegt werden kann. Ein solches Turmschott 34 verhindert auch, dass Etwas aus der Gondel 104 in dem Turm nach unten fallen kann. Das Turmschott ist in Umfangsrichtung gleichmäßig an der Turmwandung 4 befestigt und kann dabei auch einen Versteifungsring oder eine Versteifungsfläche für den Turm bilden. Durch die Befestigung der Kopplungselemente 32 an dem Turmschott 34 kann eine punktuelle Krafteinleitung in die Turmwandung vermieden werden. Stattdessen erfolgt eine Krafteinleitung in das Turmschott 34, das diese Kraft wiederum in Umfangsrichtung gleichmäßig auf die Turmwandung 4 des Turmabschnitts 2 übertragen werden kann.

Im Bereich des unteren Randes 28 sind die Kopplungselemente 32 über einen Versteifungsring 36 an der Turmwandung 4 befestigt. Auch diese Verbindung über den Versteifungsring 36 mit der Turmwandung 4 vermeidet ein punktuelles Einleiten von Kräften über das jeweilige Kopplungselement 32 in die Turmwandung 4. Wenn der Schwingkörper 12 relativ zum Turmabschnitt 2 schwingt, schwingt er damit auch relativ zu dem Turmschott 34 und dem Versteifungsring 36. Da sich der Schwingkörper 12 unterhalb des Turmschotts 34 befindet, werden die Pendelstangen 10 durch entsprechende Öffnungen durch das Turmschott 34 geführt.

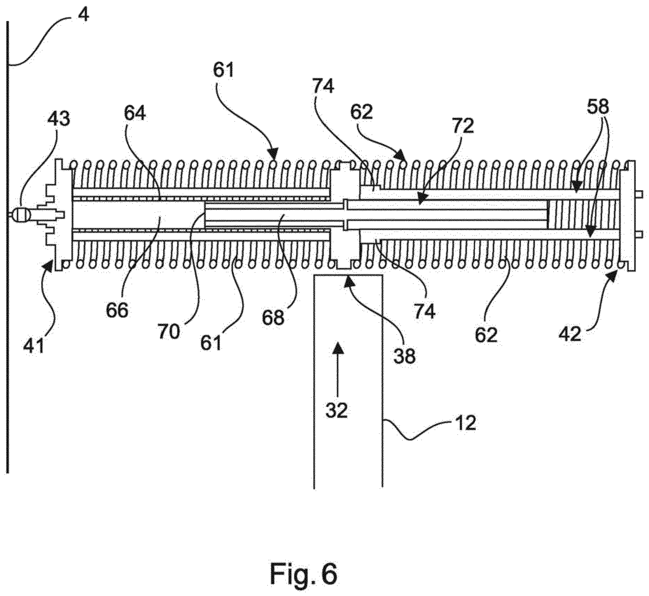

Figur 3 zeigt in einem vergrößerten Ausschnitt die Kopplung des Schwingkörpers 12 über Kopplungselemente 32, von denen in Figur 3 nur eines dargestellt ist, mit der Turmwandung 4. Das Kopplungselement 32, das in Figur 6 in einer detaillierteren Darstellung gezeigt ist, ist mit einem Mittelabschnitt 38 an dem oberen Rand 30 des Schwingkörpers 12 bzw. seines Schwingkörpermantels 16 befestigt.

Der Mittelabschnitt 38 ist federelastisch zwischen einem ersten Ankerabschnitt 41 und einem zweiten Ankerabschnitt 42 angeordnet. Der erste und der zweite Ankerabschnitt 41, 42 sind starr miteinander verbunden. Der erste Ankerabschnitt 41 ist über einen Befestigungswinkel 44 an dem Turmschott 34 befestigt.

Bei einer schwingenden Bewegung des Schwingkörpers 12 relativ zu der Turmwandung 4 erfolgt somit eine Krafteinleitung von dem Schwingkörper 12 über den Mittelabschnitt 38 in das Kopplungselement 32, das dies federelastisch auf den ersten Ankerabschnitt 41 und darüber über den Befestigungswinkel 44 auf das Turmschott 34 und damit die Turmwandung 4 überträgt. Dadurch ist der Schwingkörper 12 federelastisch mit der Turmwandung 4 gekoppelt.

Im Übrigen ist in der Figur 3 auch noch ein Kabelbündel 46 angedeutet, das durch das Turmschott 34 und insbesondere auch durch den inneren Hohlraum, nämlich den Schwingkörperhohlraum 18 des Schwingkörpers 12 geführt werden kann. Dazu kann in dem Turmschott 34 eine Öffnung vorgesehen sein, in der das Kabelbündel 46 durch eine Kabelführung 48 geführt wird.

Der Aufbau im Bereich des unteren Randes 28 wird in Figur 4 gezeigt und ist ganz ähnlich zu dem Aufbau im Bereich des oberen Randes 30. Auch im Bereich des unteren Randes 28 ist der Schwingkörper 12 mit dem Mittelabschnitt 38 des Kopplungselementes 32 gekoppelt. Das Kopplungselement 32 ist wiederum über den ersten Ankerabschnitt 41 über einen Befestigungswinkel 44 mit dem Versteifungsring 36 gekoppelt. Der Versteifungsring 36 kann auch als Beulsteife bezeichnet werden.

Der Schwingkörper 12 kann auch an seiner Unterseite eine Kabelführung 49 aufweisen.

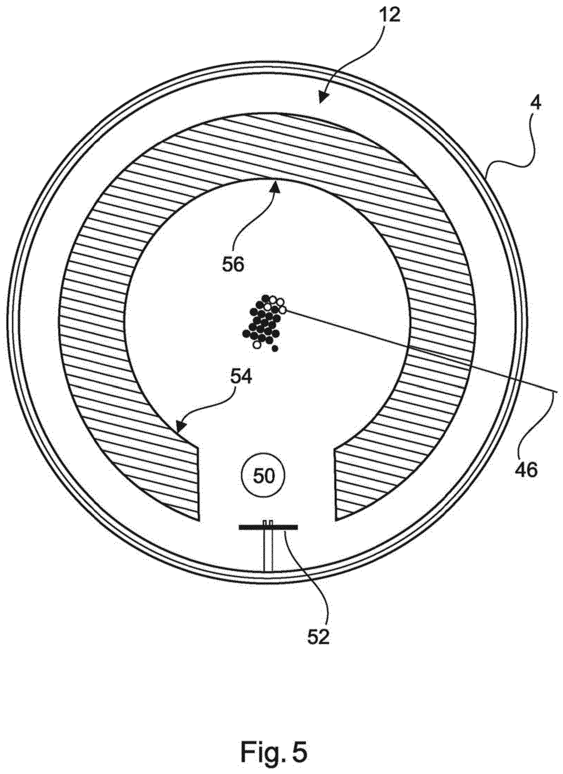

Der Draufsicht der Figur 5 ist besonders die Form des Schwingkörpers 12 zu entnehmen. Er weist im Wesentlichen eine kreiszylindrische Form auf, die mit einer senkrechten Unterbrechung 50 versehen ist. Diese senkrechte Unterbrechung 50 dient dazu, Platz im Bereich einer Turmleiter 52 zu schaffen. Der Schwingkörper 12 kann somit durch seinen vergleichsweise großen Außendurchmesser viel Volumen und damit eine hohe Masse aufweisen. Der Innenraum des Turmes bleibt dadurch gleichwohl benutzbar, besonders ein Aufstieg über die Turmleiter 52 wird dadurch nicht behindert.

Um trotz Unterbrechung 50 einen mittigen Massenschwerpunkt des Schwingkörpers 12 zu erreichen, kann die Wandstärke des Schwingkörpers 12 im Bereich der Turmleiter 52 etwas größer ausgebildet sein als an einem der Turmleiter 52 abgewandten Bereich. Zur Erläuterung ist ein zur Turmleiter 52 naher Bereich 54 und ein zur Turmleiter 52 ferner Bereich 56 eingezeichnet. Ein Masseausgleich kann somit dadurch erfolgen, dass im zur Turmleiter nahen Bereich 54 eine besonders hohe Wandstärke vorgesehen ist, wohingegen in dem zur Turmleiter fernen Bereich 56 eine möglichst geringe Wandstärke vorgesehen ist.

Die Figur 6 zeigt in einer seitlichen Schnittansicht das Kopplungselement 32 mit weiteren Details. Der erste und zweite Ankerabschnitt 41, 42 sind über Zugstangen 58 fest miteinander verbunden. Der Mittelabschnitt 38 kann relativ zu den beiden Ankerabschnitten 41 und 42 bewegt werden. Die Zugstangen 58 können dazu auch eine Führung für den Mittelabschnitt 38 für eine solche Bewegung bilden. Im Übrigen kann jeder Ankerabschnitt auch als Endplatte bezeichnet werden und der Mittelabschnitt 38 kann als Mittelplatte bezeichnet werden.

Zwischen dem Mittelabschnitt 38 und dem ersten Ankerabschnitt 41 ist eine erste Feder 61 angeordnet, die einen ersten Federabschnitt bildet. Zwischen dem Mittelabschnitt 38 und dem zweiten Ankerabschnitt 42 ist eine zweite Feder 62 angeordnet, die einen zweiten Federabschnitt bildet.

Diese beiden Federn 61 und 62 bilden zusammen ein gemeinsames Federmittel des Kopplungselementes 32. Beide Federn 61 und 62 sind im Wesentlichen identisch und beide Federn 61 und 62 sind vorgespannt. Figur 6 zeigt insoweit eine Ruheposition des Kopplungselementes 32. Die beiden Federn 61 und 62 sind als Schraubenfedern ausgebildet und jeweils in einem Aufnahmeabschnitt an dem ersten oder zweiten Ankerabschnitt 41, 42 und dem Mittelabschnitt 38 aufgenommen.

Dass die beiden Federn 61 und 62 vorgespannt sind bedeutet, dass sie in der in Figur 6 gezeigten Position bereits gestaucht sind. Beide Federn 61 und 62 üben daher bereits eine Kraft jeweils von dem ersten bzw. zweiten Ankerabschnitt 41 bzw. 42 auf den Mittelabschnitt 38 aus, bzw. umgekehrt, wobei sich diese beiden Kräfte in der gezeigten Ruheposition aber aufheben. Eine Bewegung des Mittelabschnitts 38 entlang der Zugstangen 58 erfährt durch diese Vorspannung im Wesentlichen einen linearen Zusammenhang zwischen Auslenkung und Federkraft. Durch Bewegen in eine Richtung, z.B. zum ersten Ankerabschnitt 41 hin, erhöht sich die Federkraft der ersten Feder 61, während sich die Federkraft der zweiten Feder 62 verringert. Bewegt sich der Mittelabschnitt 38 aus der gezeigten Ruheposition in die entgegengesetzte Richtung, tritt derselbe Effekt auf, wobei sich die Kraft durch die zweite Feder 62 erhöht und die durch die erste Feder 61 verringert. Die resultierende Kraft auf den Mittelabschnitt 38 und damit auch den Schwingkörper 12 ergibt sich aus der Differenz der Federkräfte der beiden Federn 61 und 62. Die Kraftzusammenhänge sind also bei beiden Auslenkungsrichtungen gleich.

Außerdem ist ein Dämpfungsabschnitt 64 vorgesehen, der im Wesentlichen einen Dämpfungszylinder 66 aufweist, in dem sich ein Dämpfungskolben 68 bewegt. Der Dämpfungskolben 68 weist einen Widerstandsstempel 70 auf, dessen Bewegung in dem Dämpfungszylinder 66 dadurch gebremst wird, dass ein Fluid in dem Dämpfungszylinder 66 diesen Widerstandsstempel 70 passieren muss. Die Dämpfungswirkung, also der bewegungsgeschwindigkeitsabhängige Widerstand ist dabei im Wesentlichen von der Bewegungsrichtung des Dämpfungskolbens 68 und damit der Bewegungsrichtung des Widerstandsstempels 70 unabhängig.

Die Kopplung des Dämpfungskolbens 68 und damit des Widerstandsstempels 70 erfolgt über ein Hüllrohr 72, das an dem Mittelabschnitt 38 befestigt ist und sich somit bei einer Bewegung des Mittelabschnitts 38 zusammen mit diesem bewegt und dabei auch den Dämpfungskolben 68 mitnimmt. Zur Führung des Mittelabschnitts 38 sind zudem Führungszylinder 74 vorgesehen, die den Mittelabschnitt 38 auf den Zugstangen 58 führen.

Es ist auch zu erkennen, dass das Kopplungselement dazu ausgelegt ist, dass die Bewegungsamplitude zwischen dem Schwingkörper 12 und der Turmwandung 4 und damit zwischen dem Mittelabschnitt 38 und dem ersten Ankerabschnitt 41 maximal halb so groß ist, wie der Abstand zwischen dem ersten Ankerabschnitt 41 und dem Mittelabschnitt 38 in seiner Ruheposition. Damit wird auch erreicht, dass die beiden Federn 61 und 62 nicht bis an ihre maximale Auslenkungsgrenze gebracht werden, wodurch für den vorgesehenen Bewegungsbereich im Wesentlichen eine Linearität im Betriebsbereich erreicht werden kann.

Außerdem ist in der Figur 6 die Anbindung des Kopplungselementes 32 dargestellt, demnach das Kopplungselement 32 mit seinem Mittelabschnitt 38 an einer Oberseite eines Schwingkörpers 12 befestigt ist. Mit seinem Ankerabschnitt 41 ist es über einen Gelenkkopf 43 an der Turmwandung 4 des in seiner Schwingung zu dämpfenden Turmes befestigt. Eine Schwingbewegung des Turmes führt dabei zu einer Relativbewegung zwischen der Turmwand 4 und dem Schwingkörper 12 und damit zu einer Relativbewegung zwischen dem Ankerabschnitt 41 und dem Mittelabschnitt 38. Es kann auch eine geringe vertikale Bewegung des Schwingkörpers 12 auftreten, die durch den Gelenkkopf 43 berücksichtigt werden kann.

Es wird darauf hingewiesen, dass der Übersichtlichkeit halber für ähnliche, aber eventuell nicht identische Elemente dieselben Bezugszeichen verwendet werden. Das gilt für die Beschreibung sämtlicher Figuren.Es wurde somit eine Lösung geschaffen und vorgeschlagen, welche die Eigenfrequenzen des Turmes beeinflussen, zumindest bedämpfen kann und damit mehr Freiheit beim Entwurf eines neuen Turmes schafft. Soweit auf Schwingungsdämpfer verzichtet wurde, muss beim Entwerfen neuer Türme nämlich Rücksicht darauf genommen werden, dass die Eigenfrequenzen der Biegeschwingung des Turms nicht mit den Anregungsfrequenzen aus dem Betrieb der Anlage zusammenfallen bzw. nicht zu nahe kommen, um schädliche Resonanzen zu vermeiden.

Beim Entwurf eines Turms mit Schwingungsdämpfer braucht keine Rücksicht auf die Lage derjenigen Eigenfrequenz genommen zu werden, auf die der Tilger abgestimmt ist, wodurch eine größere Freiheit beim Entwerfen erreicht werden kann.

Der als Hohlzylinder ausgeführte Schwingkörper, der auch als Tilgermasse bezeichnet werden kann, ermöglicht eine mittige Kabeldurchführung im Turm. Durch die Verwendung eines größtmöglichen Tilgermassenradius wird der Bauraum volumenmäßig optimal, zumindest sehr gut ausgenutzt, und dadurch kann viel Masse in dem Schwingkörper untergebracht werden. Eine sternförmige Anordnung der Feder-Dämpferelemente, also eine sternförmige Anordnung der Kopplungselemente erlaubt eine omnidirektionale, also eine nahezu richtungsunabhängige Wirkungsweise des Schwingungsdämpfers, also des Kopplungselementes.

Die Aufhängung des Schwingkörpers an den erläuterten Pendelstangen ermöglicht ebenfalls eine nahezu omnidirektionale Wirkungsweise und erzwingt eine kippfreie Bewegung des Schwingkörpers, also der Tilgermasse. Die Richtungsunabhängigkeit der Wirkung wächst mit der Anzahl der Schwingungsdämpfer, also der Kopplungselemente.

## Patentansprüche

1. Turm (102) einer Windenergieanlage (100), mit einer Turmmittelachse (24), einer Turmwandung (4) und einer Schwingvorrichtung zum Beeinflussen einer Schwingung des Turmes (102), wobei die Schwingvorrichtung
- einen im Turm (102) zur Turmwandung (4) beabstandet aufgehängten Schwingkörper (12) aufweist und
- wenigstens ein zwischen dem Schwingkörper (12) und der Turmwandung (4) befestigtes Kopplungselement zur Beeinflussung einer relativen Bewegung zwischen dem Schwingkörper (12) und der Turmwandung (4), wobei
- der Schwingkörper (12) entlang einer senkrechten Körpermittelachse (26) hohl ausgebildet ist, **dadurch gekennzeichnet, dass**
- der Schwingkörper (12) über Pendelstangen (10) an einem Befestigungsabschnitt, abgehängt ist, wobei
- drei, vier oder mehr Pendelstangen (10) vorgesehen sind, sodass der Schwingkörper auf translatorische bzw. kippfreie Bewegungen beschränkt ist.

2. Turm (102) nach Anspruch 1, **dadurch gekennzeichnet,**
**dass** der Schwingkörper (12) im Wesentlichen als Hohlkegelstumpf oder Hohlzylinder ausgebildet ist und optional eine senkrechte Unterbrechung (50) im Mantel aufweist, um Platz für eine innen an der Turmwandung (4) angeordnete Turmleiter (52) zu schaffen, so dass Servicepersonal entlang dieser Turmleiter (52) in dem Turm (102) auf und absteigen kann und dabei den Schwingkörper im Bereich der Unterbrechung passieren kann.

3. Turm (102) nach Anspruch 1 oder 2 **dadurch gekennzeichnet,**
**dass** der Schwingkörper (12) eine um die Mittelachse (26) umlaufende Schwingkörperwandung mit einer Wandstärke aufweist und die Wandstärke in Umfangsrichtung so variiert, dass der Schwingkörper (12) einen Schwerpunkt in der Mittelachse (26) aufweist, wobei die Mittelachse (26) einem geometrischen Zentrum des Schwingkörpers (12) entspricht und/oder im Ruhezustand des Schwingkörpers (12) mit der Turmmittelachse (24) übereinstimmt.

4. Turm (102) nach einem der vorstehenden Ansprüche, **dadurch gekennzeichnet,**
**dass** der Schwingkörper (12) zur Turmwandung (4) mittig mit einem mittleren Wandabstand beabstandet aufgehängt ist und der Wandabstand jeweils kleiner als ein Viertel eines Turminnendurchmessers in dem betreffenden Bereich ist, insbesondere jeweils kleiner als ein Achtel dieses Turminnendurchmessers.

5. Turm (102) nach einem der vorstehenden Ansprüche, **dadurch gekennzeichnet,**
**dass** der Schwingkörper (12) an einem Turmkopfflansch (6), abgehängt ist, wobei die Pendelstangen vorzugsweise beidseitig mit sphärischen Gelenkköpfen oder einer kardanischen Aufhängung versehen sind, so dass eine Bewegung in alle horizontalen Richtungen ermöglicht wird.

6. Turm (102) nach einem der vorstehenden Ansprüche, **dadurch gekennzeichnet,**
**dass** der Schwingkörper (129) aus einem Material mit einer höheren oder gleichen Dichte als Wasser hergestellt ist, insbesondere mit einer Dichte wenigstens doppelt so hoch wie Wasser, wobei insbesondere als Material Beton verwendet wird, insbesondere ist der Schwingkörper im Wesentlichen aus Stahlbeton gefertigt.

7. Turm (102) nach einem der vorstehenden Ansprüche, **dadurch gekennzeichnet,**
**dass** zwischen dem Schwingkörper (12) und der Turmwandung (4) mehrere Kopplungselemente (32) angeordnet und in Umfangsrichtung um den Schwingkörper (12) verteilt sind, und jeweils an dem Schwingkörper (12) und der Turmwandung (4) befestigt sind, um eine mechanische Kopplung zwischen dem Schwingkörper (12) und der Turmwandung (4) herzustellen, wobei die Kopplung eine horizontale Relativbewegung zwischen Schwingkörper (12) und Turmwandung (4) zulässt.

8. Turm (102) nach einem der vorstehenden Ansprüche, **dadurch gekennzeichnet,**
**dass** die mehreren Kopplungselemente (32) bzw. einige davon oberhalb und außerdem oder alternativ unterhalb des Schwingkörpers (12) angeordnet sind, wobei vorzugsweise eine gerade Anzahl an Kopplungselementen vorgesehen ist, insbesondere sechs Kopplungselemente.

9. Turm (102) nach einem der vorstehenden Ansprüche, **dadurch gekennzeichnet,**
**dass** der Schwingkörper (12) einen Masseschwerpunkt aufweist und der Schwingkörper in einer solchen Höhe in dem Turm (102) aufgehängt ist, dass sich der Masseschwerpunkt in einer oberen Hälfte, insbesondere in einem oberen Dreifünftel des Turmes (102) befindet, und außerdem oder alternativ an einem Befestigungsabschnitt aufgehängt ist, der an dem Turmkopfflansch (6) oder in dessen Nähe angeordnet ist.

10. Schwingvorrichtung, vorbereitet zur Verwendung in einem Turm (102) einer Windenergieanlage (100) zum Beeinflussen einer Schwingung des Turmes (102), wobei die Schwingvorrichtung
- einen im Turm (102) zur Turmwandung (4) beabstandet aufhängbaren Schwingkörper (12) aufweist und
- wenigstens ein Kopplungselement (32) zum Befestigen zwischen dem Schwingkörper (12) und der Turmwandung (4) um eine relative Bewegung zwischen dem Schwingkörper (12) und der Turmwandung (4) zu beeinflussen, wobei
- der Schwingkörper (12) entlang einer senkrechten Mittelachse (26) hohl ausgebildet ist, **dadurch gekennzeichnet, dass**
- die Schwingvorrichtung drei, vier oder mehr Pendelstangen (10) aufweist und dazu vorbereitet ist, dass der Schwingkörper (12) über die Pendelstangen (10) an einem Befestigungsabschnitt, im Turm abgehängt wird, sodass
- der Schwingkörper auf translatorische bzw. kippfreie Bewegungen beschränkt ist.

11. Schwingvorrichtung nach Anspruch 10, **dadurch gekennzeichnet, dass** das Kopplungselement umfasst,
- einen ersten Befestigungsabschnitt zum Befestigen an dem Schwingkörper (12) und
- einen zweiten Befestigungsabschnitt zum Befestigen an der Turmwandung (4),
um eine mechanische Kopplung über das Kopplungselement (32) zwischen dem Schwingkörper (12) und der Turmwandung (4) herzustellen, wobei
- die Kopplung eine Relativbewegung zwischen Schwingkörper (12) und Turmwandung (4) zulässt, und die Relativbewegung
- eine erste Bewegungsrichtung aufweist, bei der sich der erste und der zweite Befestigungsabschnitt aufeinander zu bewegen und
- eine zweite Bewegungsrichtung aufweist, bei der sich der erste und der zweite Befestigungsabschnitt voneinander entfernen, und das Kopplungselement (32)
- ein Federmittel für eine federelastische Kopplung zwischen dem ersten und zweiten Befestigungsabschnitt aufweist, wobei die federelastische Kopplung durch eine Federfunktion beschrieben wird und das Federmittel so ausgebildet ist, dass
- die Federfunktion für die erste und zweite Bewegungsrichtung im Wesentlichen gleich ist und das Kopplungselement (32)
- einen ersten und zweiten Ankerabschnitt (41, 42) aufweist, die fest miteinander verbunden sind sowie
- einen zwischen dem ersten und zweiten Ankerabschnitt (41, 42) angeordneten und zu dem ersten und zweiten Ankerabschnitt (41, 42) beweglichen Mittelabschnitt (38) aufweist, wobei
- der erste oder zweite Ankerabschnitt (41, 42) fest mit dem zweiten Befestigungsabschnitt und
- der Mittelabschnitt (38) fest mit dem ersten Befestigungsabschnitt verbunden sind, so dass die Relativbewegung einer Bewegung des Mittelabschnitts (38) zwischen den Ankerabschnitten (41, 42) entspricht und außerdem oder alternativ das Federmittel so ausgebildet ist, dass
- eine Bewegung in die erste Bewegungsrichtung in dem Federmittel zu einer Stauchung eines ersten Federabschnitts und zu einer Streckung eines zweiten Federabschnitts führt und
- eine Bewegung in die zweite Bewegungsrichtung in dem Federmittel zu einer Streckung des ersten Federabschnitts und zu einer Stauchung des zweiten Federabschnitts führt,
um dadurch die Federfunktion für die erste und zweite Bewegungsrichtung einander anzugleichen.

12. Schwingvorrichtung nach Anspruch 11, **dadurch gekennzeichnet, dass** das Kopplungselement (32) als Feder-Dämpfer-Element ausgebildet ist und
- einen Dämpfungsabschnitt (64) für eine dämpfende Kopplung zwischen dem ersten und zweiten Befestigungsabschnitt aufweist, wobei die dämpfende Kopplung durch eine Dämpfungsfunktion beschrieben wird, und wobei
- die Dämpfungsfunktion für die erste und zweite Bewegungsrichtung im Wesentlichen gleich ist, und/oder dass
- die Federfunktion und/oder die Dämpfungsfunktion linear sind/ist.

13. Schwingvorrichtung nach Anspruch 11, wobei als Federmittel des Kopplungselementes
- eine erste Feder (61) zwischen dem Mittelabschnitt (38) und dem ersten Ankerabschnitt (41) und
- eine zweite Feder (62) zwischen dem Mittelabschnitt (38) und dem zweiten Ankerabschnitt (42) angeordnet sind, wobei die erste Feder (61) den ersten Federabschnitt und die zweite Feder (62) den zweiten Federabschnitt bilden und beide Federn (61, 62) vorzugsweise identisch sind und vorzugsweise
- die erste und zweite Feder (61, 62) vorgespannt sind, so dass keine der beiden Federn bei der Bewegung des Kopplungselementes (32) einen entspannten Zustand erreicht oder überschreitet und/oder ein Abstand zwischen erstem und zweitem Ankerabschnitt (41, 42) einstellbar ist, um die Vorspannung einzustellen.

14. Turm nach einem der Ansprüche 1 bis 9, umfassend eine Schwingvorrichtung nach einem der Ansprüche 10 bis 13.

15. Windenergieanlage (100) mit einer Gondel (104) mit einem aerodynamischen Rotor (106) und einem Turm (102) mit einer Turmmittelachse (24), einer Turmwandung (4) und einer Schwingvorrichtung zum Beeinflussen einer Schwingung des Turmes (102), wobei die Windenergieanlage (100) durch wenigstens eines der Merkmale gekennzeichnet ist, die ausgewählt sind aus der Liste aufweisend, dass
- der Turm (102) gemäß einem der Ansprüche 1 bis 9 oder 14 ausgebildet ist und
- eine Schwingvorrichtung gemäß einem der Ansprüche 10 bis 13 ausgebildet ist.

## Claims

1. A tower (102) of a wind turbine (100), having a tower central axis (24), a tower wall (4) and a vibratory apparatus for influencing a vibration of the tower (102), wherein the vibratory apparatus
- has a vibratory body (12) which is suspended in the tower (102) so as to be spaced apart from the tower wall (4), and
- at least one coupling element, which is fastened between the vibratory body (12) and the tower wall (4) and which serves for influencing a relative movement between the vibratory body (12) and the tower wall (4), wherein
- the vibratory body (12) is formed so as to be hollow along a vertical body central axis (26), **characterized in that**
- the vibratory body (12) is suspended by means of pendulum rods (10) on a fastening portion, wherein
- three, four or more pendulum rods (10) are provided such that the vibratory body is restricted to translational or tilt-free movements.

2. The tower (102) as claimed in claim 1, **characterized in that** the vibratory body (12) is formed substantially as a hollow truncated cone or hollow cylinder and optionally has a vertical aperture (50) in the shell in order to provide space for a tower ladder (52) arranged at the inside on the tower wall (4), such that service personnel can climb up and down in the tower (102) along said tower ladder (52) and, in so doing, can pass the vibratory body in the region of the aperture.

3. The tower (102) as claimed in claim 1 or 2, **characterized in that** the vibratory body (12) has a vibratory body wall which encircles the central axis (26) and which has a wall thickness, and the wall thickness varies in a circumferential direction such that the vibratory body (12) has a center of gravity in the central axis (26), wherein the central axis (26) corresponds to a geometrical center of the vibratory body (12) and/or coincides, in the rest state of the vibratory body (12), with the tower central axis (24).

4. The tower (102) as claimed in any of the preceding claims, **characterized in that** the vibratory body (12) is suspended so as to be spaced apart from the tower wall (4) centrally with a mean wall spacing, and the wall spacing is in each case smaller than one quarter of a tower inner diameter in the respective region, in particular in each case smaller than one eighth of said tower inner diameter.

5. The tower (102) as claimed in any of the preceding claims, **characterized in that** the vibratory body (12) is suspended on a tower top flange (6), wherein the pendulum rods are equipped preferably at both sides with spherical joint heads or a cardanic suspension, such that a movement in all horizontal directions is made possible.

6. The tower (102) as claimed in any of the preceding claims, **characterized in that** the vibratory body (129) is produced from a material with a density higher than or equal to water, in particular with a density at least twice that of water, wherein, in particular, concrete is used as material and, in particular, the vibratory body is manufactured substantially from reinforced concrete.

7. The tower (102) as claimed in any of the preceding claims, **characterized in that** multiple coupling elements (32) are arranged between the vibratory body (12) and the tower wall (4) and are distributed in a circumferential direction around the vibratory body (12), and are in each case fastened to the vibratory body (12) and to the tower wall (4) in order to produce a mechanical coupling between the vibratory body (12) and the tower wall (4), wherein the coupling permits a horizontal relative movement between vibratory body (12) and tower wall (4).

8. The tower (102) as claimed in any of the preceding claims, **characterized in that** the multiple coupling elements (32) or some of said coupling elements are arranged above and furthermore or alternatively below the vibratory body (12), wherein preferably an even number of coupling element is provided, in particular six coupling elements.

9. The tower (102) as claimed in any of the preceding claims, **characterized in that** the vibratory body (12) has a center of mass and the vibratory body is suspended at such a height in the tower (102) that the center of mass is situated in an upper half, in particular in an upper three-fifths, of the tower (102) and is furthermore or alternatively suspended on a fastening portion which is arranged on the tower top flange (6) or in the vicinity thereof.

10. A vibratory apparatus designed for use in a tower (102) of a wind turbine (100) for the purposes of influencing a vibration of the tower (102), wherein the vibratory apparatus
- has a vibratory body (12) which can be suspended in the tower (102) so as to be spaced apart from the tower wall (4), and
- at least one coupling element (32) for fastening between the vibratory body (12) and the tower wall (4) in order to influence a relative movement between the vibratory body (12) and the tower wall (4), wherein
- the vibratory body (12) is formed so as to be hollow along a vertical central axis (26), **characterized in that**
- the vibratory apparatus has three, four or more pendulum rods (10) and is prepared for the vibratory body (12) to be suspended by means of pendulum rods (10) on a fastening portion in the tower, such that
- the vibratory body is restricted to translational or tilt-free movements.

11. A vibratory apparatus as claimed in claim 10, **characterized in that** the coupling element, comprising
- a first fastening portion for fastening to the vibratory body (12) and
- a second fastening portion for fastening to the tower wall (4)
in order to produce a mechanical coupling between the vibratory body (12) and the tower wall (4) via the coupling element (32), wherein
- the coupling permits a relative movement between vibratory body (12) and tower wall (4), and the relative movement
- has a first movement direction, in the case of which the first and the second fastening portion move toward one another, and
- has a second movement direction, in the case of which the first and the second fastening portion move away from one another, and the coupling element (32)
- has a spring means for resiliently elastic coupling between the first and second fastening portions, wherein the resiliently elastic coupling is described by a spring function, and the spring means is formed such that
- the spring function is substantially identical for the first and second movement directions and, said coupling element (32)
- has a first and a second anchor portion (41, 42), which are fixedly connected to one another, and
- a central portion (38) which is arranged between the first and second anchor portions (41, 42) and which is movable relative to the first and second anchor portions (41, 42), wherein
- the first or second anchor portion (41, 42) is fixedly connected to the second fastening portion and
- the central portion (38) is fixedly connected to the first fastening portion, such that the relative movement corresponds to a movement of the central portion (38) between the anchor portions (41, 42), and furthermore or alternatively, the spring means is formed such that
- a movement in the first movement direction in the spring means leads to a compression of a first spring portion and to an extension of a second spring portion, and
- a movement in the second movement direction in the spring means leads to an extension of the first spring portion and to a compression of the second spring portion,
in order to thus equalize the spring function for the first and second movement directions with one another.

12. The coupling element (32) as claimed in claim 11,
**characterized in that**
the coupling element (32) is formed as a spring-damper element and
- has a damping portion (64) for coupling with damping action between the first and second fastening portions, wherein the coupling with damping action is described by a damping function, and wherein
- the damping function is substantially equal for the first and second movement directions, and/or that
- the spring function and/or the damping function is linear.

13. The vibratory apparatus as claimed in claim 11, wherein
as spring means of the coupling element,
- a first spring (61) is arranged between the central portion (38) and the first anchor portion (41), and
- a second spring (62) is arranged between the central portion (38) and the second anchor portion (42), wherein the first spring (61) forms the first spring portion and the second spring (62) forms the second spring portion, and both springs (61, 62) are preferably identical, and preferably
- the first and second springs (61, 62) are prestressed such that neither of the two springs reaches or overshoots a relaxed state during the movement of the coupling element (32) and/or a spacing between the first and second anchor portions (41, 42) is adjustable in order to adjust the prestress.

14. A tower as claimed in any of claims 1 to 9, comprising a vibratory apparatus as claimed in any of claims 10 to 13.

15. A wind turbine (100) having a nacelle (104) with an aerodynamic rotor (106) and having a tower (102) with a tower central axis (24), a tower wall (4) and a vibratory apparatus for influencing a vibration of the tower (102), wherein the wind turbine (100) is **characterized by** at least one of the features selected from the list comprising that
- the tower (102) is designed as claimed in any of claims 1 to 9 or 14, and
- a vibratory apparatus is formed as claimed in any of claims 10 to 13.

## Revendications

1. Tour (102) d'une éolienne (100), avec un axe central de tour (24), une paroi de tour (4) et un dispositif oscillant pour influencer une oscillation de la tour (102), dans laquelle le dispositif oscillant
- présente un corps oscillant (12) suspendu dans la tour (102) de manière espacée par rapport à la paroi de la tour (4) et
- au moins un élément de couplage fixé entre le corps oscillant (12) et la paroi de tour (4) pour influencer un déplacement relatif entre le corps oscillant (12) et la paroi de tour (4), dans laquelle
- le corps oscillant (12) est réalisé de manière creuse le long d'un axe central de corps vertical (26), **caractérisée en ce que**
- le corps oscillant (12) est suspendu par l'intermédiaire de barres pendulaires (10) à une section de fixation, dans laquelle
- trois, quatre barres pendulaires (10) ou plus sont prévues si bien que le corps oscillant est limité à des déplacements translationnels ou non basculants.

2. Tour (102) selon la revendication 1, **caractérisée en ce que** le corps oscillant (12) est réalisé sensiblement comme un cône creux tronqué ou un cylindre creux et présente en option une interruption verticale (50) dans l'enveloppe pour créer de l'espace pour une échelle de tour (52) disposée à l'intérieur contre la paroi de tour (4), de telle sorte que le personnel de service peut monter et descendre le long de ladite échelle de tour (52) dans la tour (102) et peut ainsi franchir le corps oscillant dans la zone de l'interruption.

3. Tour (102) selon la revendication 1 ou 2, **caractérisée en ce que** le corps oscillant (12) présente une paroi de corps oscillant s'étendant tout autour de l'axe central (26) avec une épaisseur de paroi et l'épaisseur de paroi varie dans le sens périphérique de telle sorte que le corps oscillant (12) présente un centre de gravité dans l'axe central (26), dans laquelle l'axe central (26) correspond à un centre géométrique du corps oscillant (12) et/ou coïncide dans l'état de repos du corps oscillant (12) avec l'axe central de tour (24).

4. Tour (102) selon l'une quelconque des revendications précédentes, **caractérisée en ce que** le corps oscillant (12) est suspendu de manière espacée au centre à une distance de paroi moyenne par rapport à la paroi de tour (4) et la distance de paroi est respectivement inférieure à un quart d'un diamètre intérieur de tour dans la zone concernée, en particulier est inférieure respectivement à un huitième dudit diamètre intérieur de tour.

5. Tour (102) selon l'une quelconque des revendications précédentes, **caractérisée en ce que** le corps oscillant (12) est suspendu à une bride de tête de tour (6), dans laquelle les barres oscillantes sont de préférence pourvues des deux côtés de têtes d'articulation sphériques ou d'une suspension à cardan de manière à rendre possible un déplacement dans toutes les directions horizontales.

6. Tour (102) selon l'une quelconque des revendications précédentes, **caractérisée en ce que** le corps oscillant (129) est fabriqué à partir d'un matériau d'une densité supérieure ou égale à celle de l'eau, en particulier d'une densité au moins deux fois supérieure à celle de l'eau, dans laquelle du béton est utilisé en particulier comme matériau, le corps oscillant est fabriqué en particulier sensiblement à partir de béton armé.

7. Tour (102) selon l'une quelconque des revendications précédentes, **caractérisée en ce que** plusieurs éléments de couplage (32) sont disposés entre le corps oscillant (12) et la paroi de tour (4) et sont répartis dans le sens périphérique autour du corps oscillant (12), et sont fixés respectivement au corps oscillant (12) et à la paroi de tour (4) pour établir un couplage mécanique entre le corps oscillant (12) et la paroi de tour (4), dans laquelle le couplage autorise un déplacement relatif horizontal entre le corps oscillant (12) et la paroi de tour (4).

8. Tour (102) selon l'une quelconque des revendications précédentes, **caractérisée en ce que** les plusieurs éléments de couplage (32) ou certains d'entre eux sont disposés au-dessus et par ailleurs ou en variante en dessous du corps oscillant (12), dans laquelle de préférence un nombre pair d'éléments de couplage est prévu, en particulier six éléments de couplage.

9. Tour (102) selon l'une quelconque des revendications précédentes, **caractérisée en ce que** le corps oscillant (12) présente un centre de gravité et le corps oscillant est suspendu à une telle hauteur dans la tour (102) que le centre de gravité se trouve dans une moitié supérieure, notamment dans les trois cinquièmes supérieurs de la tour (102), et est suspendu par ailleurs ou en variante à une section de fixation qui est disposée sur la bride de tête de tour (6) ou à proximité de celle-ci.

10. Dispositif oscillant préparé pour être utilisé dans une tour (102) d'une éolienne (100) pour influencer une oscillation de la tour (102), dans lequel le dispositif oscillant
- présente un corps oscillant (12) pouvant être suspendu dans la tour (102) de manière espacée par rapport à la paroi de la tour (4) et
- au moins un élément de couplage (32) destiné à être fixé entre le corps oscillant (12) et la paroi de tour (4) pour influencer un déplacement relatif entre le corps oscillant (12) et la paroi de tour (4), dans lequel
- le corps oscillant (12) est réalisé de manière creuse le long d'un axe central vertical (26), **caractérisé en ce que**
- le dispositif oscillant présente trois, quatre barres pendulaires (10) ou plus et est préparé pour que le corps oscillant (12) soit suspendu par l'intermédiaire des barres pendulaires (10) à une section de fixation, dans la tour, si bien que
- le corps oscillant est limité à des déplacements translationnels ou sans basculement.

11. Dispositif oscillant selon la revendication 10, **caractérisé en ce que** l'élément de couplage comprend
- une première section de fixation pour la fixation au corps oscillant (12) et
- une seconde section de fixation pour fixation à la paroi de tour (4),
pour établir un couplage mécanique par l'intermédiaire de l'élément de couplage (32) entre le corps oscillant (12) et la paroi de tour (4), dans lequel
- le couplage permet un déplacement relatif entre le corps oscillant (12) et la paroi de tour (4), et le déplacement relatif
- présente un premier sens de déplacement, dans lequel la première et la seconde section de fixation se déplacent l'une par rapport à l'autre et
- présente un deuxième sens de déplacement dans lequel la première et la seconde section de fixation s'éloignent l'une de l'autre, et l'élément de couplage (32)
- présente un moyen à ressort pour un couplage élastique à ressort entre la première et la seconde section de fixation, dans lequel le couplage élastique à ressort est décrit par une fonction de ressort et le moyen à ressort est réalisé de telle sorte que
- la fonction de ressort pour le premier et le deuxième sens de déplacement est sensiblement identique et l'élément de couplage (32)
- présente une première et une seconde section d'ancrage (41, 42), qui sont reliées de manière solidaire l'une à l'autre, et
- présente également une section centrale (38) disposée entre la première et la seconde section d'ancrage (41, 42) et mobile par rapport à la première et à la seconde section d'ancrage (41, 42), dans lequel
- la première ou la seconde section d'ancrage (41, 42) est reliée de manière solidaire à la seconde section de fixation et
- la section centrale (38) est reliée de manière solidaire à la première section de fixation de telle sorte que le déplacement relatif correspond à un déplacement de la section centrale (38) entre les sections d'ancrage (41, 42) et, par ailleurs ou en variante, le moyen à ressort est réalisé de telle sorte
- qu'un déplacement dans le premier sens de déplacement dans le moyen à ressort donne lieu à un tassement d'une première section de ressort et à un étirement d'une deuxième section de ressort et
- un déplacement dans le deuxième sens de déplacement dans le moyen à ressort donne lieu à un étirement de la première section de ressort et un tassement de la deuxième section de ressort,
pour ajuster ainsi la fonction de ressort pour le premier et le deuxième sens de déplacement.

12. Dispositif oscillant selon la revendication 11, **caractérisé en ce que** l'élément de couplage (32) est réalisé comme un élément ressort-amortisseur et
- présente une section d'amortissement (64) pour un couplage d'amortissement entre la première et la seconde section de fixation, dans lequel le couplage d'amortissement est décrit par une fonction d'amortissement, et dans lequel
- la fonction d'amortissement pour le premier et le deuxième sens de déplacement est sensiblement identique, et/ou que
- la fonction de ressort et/ou la fonction d'amortissement sont linéaires.

13. Dispositif oscillant selon la revendication 11, dans lequel sont disposés, en tant que moyen à ressort de l'élément de couplage,
- un premier ressort (61) entre la section centrale (38) et la première section d'ancrage (41) et
- un deuxième ressort (62) entre la section centrale (38) et la seconde section d'ancrage (42), dans lequel le premier ressort (61) forme la première section de ressort et le deuxième ressort (62) forme la deuxième section de ressort et les deux ressorts (61,62) sont de préférence identiques et de préférence
- les premier et deuxième ressorts (61,62) sont précontraints de sorte qu'aucun des deux ressorts n'atteint ou ne dépasse un état détendu lors du déplacement de l'élément de couplage (32) et/ou qu'un écart entre la première et la seconde section d'ancrage (41,42) peut être réglé pour régler la précontrainte.

14. Tour selon l'une quelconque des revendications 1 à 9, comprenant un dispositif oscillant selon l'une quelconque des revendications 10 à 13.

15. Éolienne (100) avec une nacelle (104) avec un rotor aérodynamique (106) et une tour (102) avec un axe central de tour (24), une paroi de tour (4) et un dispositif oscillant pour influencer une oscillation de la tour (102), dans laquelle l'éolienne (100) est **caractérisée par** au moins une des caractéristiques qui sont choisies dans la liste indiquant que
- la tour (102) est réalisée selon l'une quelconque des revendications 1 à 9 ou 14 et
- un dispositif oscillant est réalisé selon l'une quelconque des revendications 10 à 13.
